# EUROPÄISCHE PATENTSCHRIFT

(11) **EP 1 249 391 B1**
(45) Veröffentlichungstag und Bekanntmachung des Hinweises auf die Patenterteilung: **24.05.2006**
(21) Anmeldenummer: 02004070.5
(22) Anmeldetag: 23.02.2002
(51) Int. Cl.: B64C 1/14, B64C 1/40, B64C 1/12, B60Q 3/02

(54) **Kabinenfensterverkleidung für Passagierkabinen insbesondere in einem Verkehrsflugzeug**
Fairing for pasenger cabin window, specially for aircraft
Revêtement pour fenêtres de cabines de passagers, notament pour aéronefs

(30) Priorität: 10.04.2001 DE 10117964
(43) Veröffentlichungstag der Anmeldung: 16.10.2002
(73) Patentinhaber: Airbus Deutschland GmbH, 21129 Hamburg (DE)
(72) Erfinder: Lau, Michael, 21739 Dollern (DE); Schaich, Sven, 21629 Neu Wulmsdorf (DE)
(74) Vertreter: Hansmann, Dierk

(56) Entgegenhaltungen:
- EP-A- 0 279 620
- EP-A- 0 437 870
- US-A- 2 198 579
- US-A- 2 516 805
- US-A- 4 541 595
- US-A- 5 558 425
- US-A- 5 816 534
- US-A- 6 082 674

## Beschreibung

Die Erfindung betrifft eine Passagierkabine, insbesondere in einem Verkehrsflugzeug, mit einen Kabinenfensterverkleidung für jeweils zwei Kabinenfenster, wobei Verkleidungselemente im Bereich mindestens eines Kabinenfensters vorgesehen sind und das mindestens eine Kabinenfenster eine Innen- und eine Außenscheibe aufweist.

In herkömmlichen Passagierkabinen in einem Verkehrsflugzeug finden Kabinenfenster Anwendung, die aufgrund der auftretenden Druckunterschiede während des Fluges und aufgrund des einem Innendruck ausgesetzten Flugzeugrumpfes druckdicht ausgeführt sein müssen. Üblich ist es dabei, einzeln eingesetzte, kleine Außenfenster zu verwenden, um eine Schwächung der Rumpfstruktur so gering wie möglich zu halten. Solche Kabinenfenster sind beispielsweise in DEAS 1 252 533 oder DD 23 321 oder US 2,575,757 beschrieben. Sie weisen eine Außenscheibe und eine Innenscheibe auf, zwischen denen ein Scheibenzwischenraum gebildet ist und am Randbereich des Scheibenzwischenraumes ein Rahmen angeordnet ist. Dieser Rahmen wird üblicherweise als Fenstertrichter bezeichnet, da er von der kleinen Außenscheibe ausgehend sich aufweitet und am Randbereich der Innenscheibe, die eine größere Fläche als die Außenscheibe aufweist, endet. Die Innenscheibe ist ein Teil der Passagierkabine und der Abstand zwischen der Außenscheibe und der Innenscheibe ist aufgrund der Bautiefe zwischen Flugzeugaußerthaut und der Innenverkleidung der Passagierkabine vorgegeben. Aufgrund der entstehenden "Trichterwirkung" bei den bekannten Kabinenfensteranordnungen erscheinen die Außenfenster extrem klein und eine beengende Wirkung auf die Passagiere haben. Auch ist die Kabinenverkleidung in Bereich der Fenster einstückig ausgebildet, was flexible Gestaltungsmöglichkeiten verhindert und einen uniformen Gesamteindruck von der Passagierkabine vermittelt.

Die US-A-4 541 595 zeigt eine Fensterverkleidung für ein Flugzeug, die ein Kabinenfenster (Außenfenster) umschließt. Das gezeigte Fensterverkleidungsteil (interior panel 10) ist als ein Gesamtbauteil ausgebildet und weist einen im wesentlichen rechteckförmigen Rahmen auf, der im zentralen mittleren Bereich eine Öffnung bildet, in die das Flugzeugfenster eingesetzt werden kann. Hier ist ebenso ein "Trichtereffekt" einer derartigen Kabinenfensterverkleidung gegeben, die das Außenfenster als besonders klein wirken lässt.

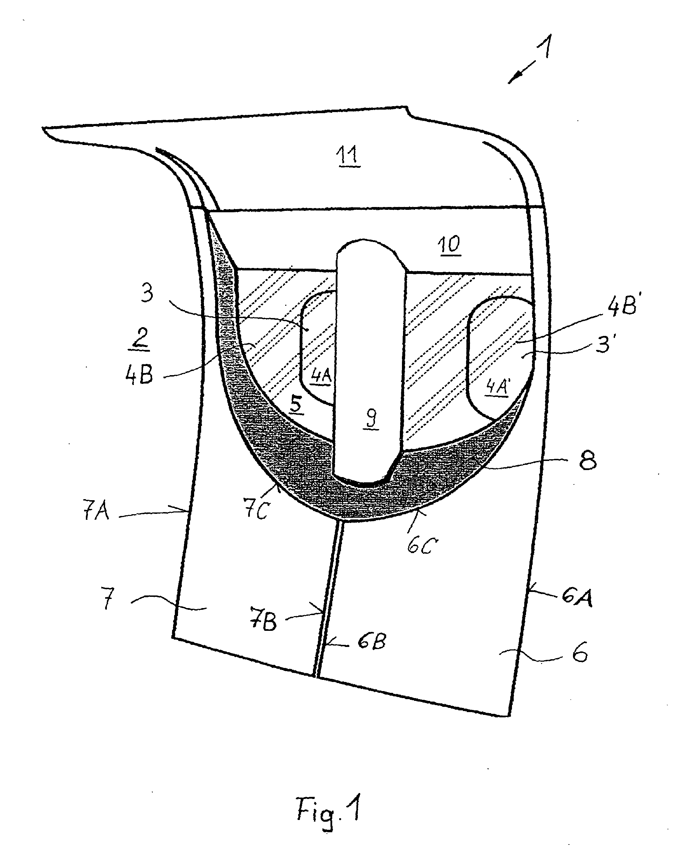

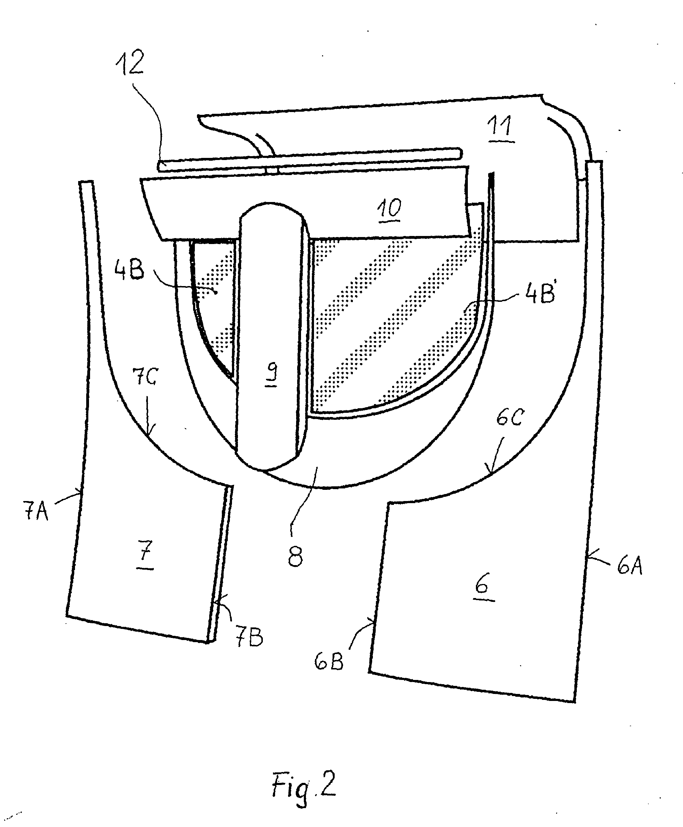

Aus EP-A-0 279 620 sind Verkleidungsmodule bekannt, die zusammengesetzt werden können und für Passagierkabinen eines Flugzeuges vorgesehen sind. Diese Verkleidungsmodule sind als Gesamtheit selbststützend innerhalb des Flugzeugrumpfes befestigt und dienen dem Lärmschutz für Passagiere. Die Verkleidungsmodule sind jedoch nicht durch einen modularen Aufbau im Bereich der Kabinenfenster gekennzeichnet. Insbesondere aus Fig. 3 ist erkennbar, dass auch hier die "Trichterwirkung" zum Kabinenaußenfenster auftritt.

Der Erfindung liegt daher die Aufgabe zugrunde, im Bereich der Kabinenfenster eines Verkehrsflugzeuges eine Kabinenfensterverkleidung so auszubilden, das in diesem Bereich variable Änderungen der Gestaltung der Passagierkabine unaufwendig möglich sind und die durch Fenstertrichter entstehende "Trichterwirkung". die einen beengten Raumeindruck vermittelt, vermieden wird.

Diese Aufgabe wird bei einer gattungsgemäßen Kabinenfensterverkleidung mit den im Patentanspruch 1 genannten Maßnahmen gelöst.

Dabei ist insbesondere von Vorteil, dass ein großzügiger optischer Raumeindruck entsteht und eine Vielzahl von Möglichkeiten der Gestaltung des Seitenwandbereiches der Passagierkabine möglich wird. Mit einer derartigen Kabinenfensterverkleidung kann flexibel auf Kundenwünsche reagiert und gestalterische Veränderungen der Passagierkabine können unaufwendig ermöglicht werden. Es sind Dekorelemente entsprechend den Anforderungen in unterschiedlicher gestalterischer Form (und Farbe) einsetzbar. Aufgrund der Modularität der Verkleidungselemente und der kleineren Montageeinheiten kann beim Einbau oder einem Austausch von Verkleidungselementen eine bessere Handhabbarkeit und ein geringerer Montageaufwand erreicht werden.

Weiterbildungen und vorteilhafte Ausgestaltungen sind in den Unteransprüchen 2 bis 9 angegeben.

In der Zeichnung ist ein Ausführungsbeispiel der Erfindung dargestellt, das nachstehend anhand der Figuren 1 und 2 näher beschrieben wird. In den Figuren sind gleiche Bauteile mit gleichen Bezugszeichen versehen.

Die Zeichnung zeigt im einzelnen:
- Fig. 1: eine erfindungsgemäße Kabinenfensterverkleidung für ein Passagierflugzeug im Bereich vom zwei Kabinenfenstern und
- Fig. 2: die erfindungsgemäße Kabinenfensterverkleidung in einer Explosionsdarstellung.

In Fig. 1 ist eine Ansicht einer Kabinenfensterverkleidung 1 für eine Passagierkabine 2 eines Verkehrsflugzeuges in perspektivischer Darstellung ersichtlich. Im gezeigten Ausschnitt des Verkehrsflugzeuges sind Kabinenfenster 3 bzw. 3' vorgesehen. Im Bereich der Kabinenfenster 3 bzw. 3' ist die erfindungsgemäße Kabinenfensterverkleidung 1 angeordnet, die aus mehreren Verkleidungselementen 6, 7, 8, 9, 10 und 11 modular zusammengesetzt ist.
Zur Verdeutlichung sind die Verkleidungselemente 6 bis 11 in einer Explosionsdarstellung in Fig. 2 gezeigt. Im einzelnen ist vorgesehen, dass mit der erfindungsgemäßen Kabinenfensterverkleidung 1 im Bereich von zwei oder auch mehreren Kabinenfenstern 3 bzw. 3' eine ansprechende und flexibel einsetzbare Verkleidung der Passagierkabine 2 vorgenommen werden kann. Die Kabinenfenster 3 bzw. 3' weisen jeweils eine relativ kleine Außenscheibe 4A bzw. 4A' sowie eine Innenscheibe 4B bzw. 4B' auf, die den Bereich der beiden Außenscheiben 4A und 4A' abdeckt und einen relativ großen Sichtbereich auf die Außenscheiben 4A und 4A' zulässt. Im Bereich zwischen den Außenscheiben 4A bzw. 4A' und den Innenscheiben 4B und 4B' ist eine Fensterabdeckung 5 vorgesehen, die beide Kabinenfenster 3 und 3' umrahmt und den Bereich zwischen den Fenstern abdeckt. Die Verkleidungselemente 6 und 7 bilden die Seitenwandverkleidungsplatten, die den Bereich unterhalb der Kabinenfenster 3 bzw. 3' abdecken. Die beiden Seitenwandverkleidungsplatten 6 und 7 sind vorzugsweise symmetrisch ausgebildet und weisen jeweils einen Außenrand 6A bzw. 7A auf, an dem eine nächste Seitenwandverkleidung der Passagierkabine anschließen kann. Die Übergänge zwischen den Seitenwandverkleidungen 6 und 7 einer Kabinenfensterverkleidung 1 zu einer nächsten Kabinenfensterverkleidung oder auch zu einer Wandverkleidung sowie die Befestigung der Verkleidungselemente sind mit bekannten Mitteln und Befestigungstechniken vorzusehen. Üblicherweise erfolgt die Befestigung der Verkleidungsteile mit Haltern an der Flugzeugstruktur . Die Seitenwandverkleidungsteile 6 und 7 sind mit ihren Innenrändern 6B und 7B nach bekannter Art zusammengeführt und bilden im oberen Randbereich 6C, 7C eine u-förmige Aufnahme für ein unteres Fensterpaneel, welches vom Verkleidungselement 8 gebildet wird. Das untere Fensterpaneel 8 weist in der gezeigten Ausführungsform entsprechend der aus den Wandverkleidungselementen 6 und 7 gebildeten Aufnahme ebenfalls eine annähernd u-förmige Form auf und verdeckt unterhalb und seitlich der Innenscheibe 4B bzw. 4B' die Halterung der Innenscheibe an der Struktur des Flugzeugrumpfes oder bildet selbst die Halterung für die Innenscheiben. Am unteren Fensterpaneel 8 ist mittig ein Zentralpaneel angeordnet, das durch das Verkleidungselement 9 gebildet ist. Das Zentralpaneel 9 ist in vertikaler Richtung im Bereich zwischen den beiden Kabinenfenstern 3 und 3' vorgesehen, vorzugsweise zur Abdeckung von Strukturbauteilen wie einen Flugzeugspant (nicht gezeigt). Weiterhin wird der Übergang von der Innenscheibe 4B zur Innenscheibe 4B' durch das Anordnen des Zentralpaneels 9 verdeckt. Das Zentralpaneel 9 kann in vielfältiger gestalterischer Form eingesetzt werden. Auch ist es möglich, dass die Innenscheiben 4B und 4B' als ein einstückiges Teil ausgebildet werden und das Zentralpaneel 9 keine Abdeckfunktion erfüllt, sondern ausschließlich zu Gestaltungszwecken verwendet wird. So kann das Zentralpaneel 9 lichtdurchscheinend mit einer Hinterleuchtung oder mit lichtreflektierenden Schichten versehen oder mit verschiedenen Materialien (einfache Lackierung, Holz, Edelstahl, Dekorfolien o.ä.) realisiert sein. Damit ist es möglich, dass auch im Bereich der Seitenwände der Passagierkabine Klassenunterschiede möglich gemacht werden und der bisher vorhandene uniforme Eindruck ohne aufwendigen Austausch der gesamten Verkleidungselemente in der Kabine durch vielfältige Möglichkeiten der Anordnung der modularen Verkleidungselemente verändert wird. Oberhalb der Kabinenfenster 3 und 3' ist in horizontaler Lage eine Lichtabdeckung 10 angeordnet. Die Lichtabdeckung 10 besteht vorzugsweise aus lichtdurchscheinendem Material. Die seitlichen Begrenzungen der Lichtabdeckung 10 sind durch die auslaufenden Schenkel des Dekorpaneels 8 gebildet. Das Zentralpaneel 9 grenzt mit dem oberen Ende an die Lichtabdeckung 10. Hinter der Lichtabdeckung 10 ist ein Leuchtmittel 12, vorzugsweise eine Leuchtstoffröhre angeordnet (ersichtlich in Fig. 2). Ein Übergangspaneel 11 ist als Übergang vom oberen Rand der Innenscheiben 4B und 4B' zu einer Deckenverkleidung (nicht gezeigt) im Deckenbereich angeordnet. Zwischen der Lichtabdeckung 10 und dem Übergangspaneel 11 ist das Leuchtmittel 12 vorgesehen. Verschiedenste Beleuchtungsvarianten sind mit einer derartigen Anordnung möglich. So kann beispielsweise ein Abstrahlung des Lichts nach oben durch einen Spalt oder Hinterschnitt zwischen Lichtabdeckung 10 und Übergangspaneel 11 als indirekte Kabinenbeleuchtung genutzt werden oder durch den Spalt bzw. Hinterschnitt ist eine Klimaluftausblasung möglich. Die Lichtabdeckung 10 kann in einer derartigen Ausführung auch lichtundurchlässig ausgebildet sein. Das Übergangspaneel 11 kann beispielsweise auch mit einer lichtreflektierenden Schicht versehen sein. Auch ist es denkbar, teilweise Licht bzw. Klimaluft nach unten durch einen unteren Spalt oder Hinterschnitt zwischen der Lichtabdeckung 10 und dem Übergangspaneel 11 abzustrahlen bzw. auszublasen.

### Bezugszeichenliste

- 1 -: Kabinenfensterverkleidung
- 2 -: Passagierkabine
- 3, 3' -: Kabinenfenster
- 4A, 4B, 4A', 4B' -: Außenscheibe und Innenscheibe vom Kabinenfenster
- 5 -: Fensterabdeckung (Fenstertrichter zwischen Außen-und Innenscheibe)
- 6, 7 -: Seitenwandverkleidungsplatten
- 6A, 7A -: Außenrand an 5 und 6
- 6B, 7B -: Innenrand an 5 und 6
- 6C, 7C -: oberer Rand von 5, 6
- 8 -: Dekorpaneel (unteres Fensterpaneel)
- 9 -: Zentralpaneel
- 10 -: Lichtabdeckung
- 11 -: Deckenpaneel
- 12 -: Leuchtmittel

## Patentansprüche

1. Passagierkabine insbesondere in einem Verkehrsflugzeug, mit einer Kabinenfensterverkleidung für jeweils zwei Kabinenfenster,
- wobei die Kabinenfensterverkleidung die jeweils zwei Kabinenfenster (3, 3') mit ihren Außenscheiben (4A, 4A') umschließt und durch eine Mehrzahl von Verkleidungselementen (6, 7, 8, 9, 10 und 11) zusammengesetzt ist,
- die Verkleidungselemente (6, 7, 8, 9, 10 und 11) separate Bauteile sind und eine modulare Anordnung bilden,
- zumindest ein Teil der Verkleidungselemente Seitenwandverkleidungsplatten (6, 7) sind, die im oberen Randbereich (6C, 7C) eine Aufnahme für ein Fensterpaneel (8) bilden,
- oberhalb des Randbereichs (6C, 7C) der Seitenwandverkleidungsplatten (5, 6) das Fensterpaneel (8) angeordnet ist,
- oberhalb des Fensterpaneels (8) mindestens eine Innenscheibe (4B, 4B') angeordnet ist und
- ein Zentralpaneel (9) zwischen den jeweils zwei Kabinenfenstern (3, 3') angeordnet ist und eine Abdeckung für zwischen den Kabinenfenstern (3, 3') verlaufende Strukturelemente bildet, wobei das Zentralpaneel (9) mittig am Fensterpaneel (8) aufgesetzt ist.

2. Kabinenfensterverkleidung nach Anspruch 1, **dadurch gekennzeichnet, dass** weitere Verkleidungselemente als Übergangspaneel (11) und Lichtabdeckung (10) ausgebildet sind, die oberhalb der Innenscheibe den Übergang zur Kabinendecke bilden und zumindest ein Spalt oder Hinterschnitt als Lichtaustritt bzw. Klimaluftaustritt zwischen Übergangspaneel (11) und Lichtabdeckung (10) vorgesehen ist.

3. Kabinenfensterverkleidung nach Anspruch 2, **dadurch gekennzeichnet, dass** ein Leuchtmittel (12) im Spalt zwischen Übergangspaneel (11) und Lichtabdeckung (10) vorgesehen ist.

4. Kabinenfensterverkleidung nach einem der Ansprüche 2 oder 3, **dadurch gekennzeichnet, dass** das Übergangspaneel (11) mit einer lichtreflektierenden Schicht versehen ist.

5. Kabinenfensterverkleidung nach einem der Ansprüche 1 bis 4, **dadurch gekennzeichnet, dass** das Fensterpaneel (8) zur Aufnahme der mindestens einen Innenscheibe (4B, 4B') im wesentlichen u-förmig ausgebildet ist.

6. Kabinenfensterverkleidung nach einem der Ansprüche 1 bis 5, **dadurch gekennzeichnet, dass das** Zentralpaneel (9) vertikal im Bereich der mindestens einen Innenscheibe (4B, 4B') verläuft.

7. Kabinenfensterverkleidung nach einem der Ansprüche 1 bis 6, **dadurch gekennzeichnet, dass** das Zentralpaneel (9) eine Halterung für die mindestens eine Innenscheibe (4B, 4B') bildet.

8. Kabinenfensterverkleidung nach einem der Ansprüche 1 bis 7, **dadurch gekennzeichnet, dass** das Zentralpaneel (9) lichtdurchlässig oder mit einer lichtreflektierenden Schicht vorgesehen ist.

9. Kabinenfensterverkleidung nach einem der Ansprüche 1 bis 8, **dadurch gekennzeichnet, dass** das Zentralpaneel (9) aus verschiedenen Materialien, wie Holz, Edelmetalle, lackierten oder mit Dekorfolie versehenen Bauteilen, gebildet wird.

## Claims

1. Passenger cabin, in particular in a commercial aircraft, with a cabin window trim for two cabin windows respectively,
- the cabin window trim enclosing the two cabin windows (3, 3') respectively with their outer panes (4A, 4A') and being composed of a plurality of trim elements (6, 7, 8, 9, 10 and 11),
- the trim elements (6, 7, 8, 9, 10 and 11) being separate components and forming a modular arrangement,
- at least a portion of the trim elements being side wall trim plates (6, 7), which in the upper edge area (6C, 7C) form a recess for a window breast moulding (8),
- the window breast moulding (8) being arranged above the edge area (6C, 7C) of the side wall trim plates (5, 6),
- at least one inner pane (4B, 4B') being arranged above the window breast moulding (8) and
- a central panel (9) being arranged between the respectively two cabin windows (3, 3') and forming a cover for structural elements running between the cabin windows (3, 3'), the central panel (9) being placed centrally on the window breast moulding (8).

2. Cabin window trim according to claim 1, **characterized in that** further trim elements are formed as transition panel (11) and light cover (10), which form the transition above the inner pane to the cabin ceiling and at least a gap or undercut is provided as a light exit or air conditioning exit between transition panel (11) and light cover (10).

3. Cabin window trim according to claim 2, **characterized in that** a lighting means (12) is provided in the gap between transition panel (11) and light cover (10).

4. Cabin window trim according to one of claims 2 or 3, **characterized in that** the transition panel (11) is provided with a light-reflecting layer.

5. Cabin window trim according to one of claims 1 to 4, **characterized in that** the window breast moulding (8) to take up the at least one inner pane (4B, 4B') is formed substantially in a U-shape.

6. Cabin window trim according to one of claims 1 to 5, **characterized in that** the central panel (9) runs vertically in the area of the at least one inner pane (4B, 4B').

7. Cabin window trim according to one of claims 1 to 6, **characterized in that** the central panel (9) forms a support for the at least one inner pane (4B, 4B').

8. Cabin window trim according to one of claims 1 to 7, **characterized in that** the central panel (9) is light-permeable or is provided with a light-reflecting layer.

9. Cabin window trim according to one of claims 1 to 8, **characterized in that** the central panel (9) is formed of different materials such as wood, noble metals, components that are lacquered or provided with decorative foil.

## Revendications

1. Cabine à passagers, en particulier dans un avion de ligne, comportant un habillage de fenêtre de cabine pour chaque fois deux fenêtres de cabine, dans laquelle
l'habillage de fenêtre de cabine qui englobe chaque fois deux fenêtres de cabine (3, 3') est composé d'une pluralité d'éléments d'habillage (6, 7, 8, 9, 10 et 11),
les éléments d'habillage (6, 7, 8, 9, 10 et 11) sont des éléments de construction séparés et forment un ensemble modulaire,
au moins une partie des éléments d'habillage sont des panneaux d'habillage (6, 7) de parois latérales qui, dans la zone de bord (6C, 7C) supérieure, définissent un emplacement de montage pour un panneau de fenêtre (8),
le panneau de fenêtre (8) est disposé au-dessus de la zone de bord (6C, 7C) des panneaux d'habillage (6, 7) de parois latérales,
au moins une vitre intérieure (4B, 4B') est disposée au dessus du panneau de fenêtre (8) et
un panneau central (9) est disposé entre chaque fois deux fenêtres de cabine (3, 3') et forme un cache pour des éléments de structure qui s'étendent entre les fenêtres de cabine (3, 3'), le panneau central (9) étant monté de manière centrée sur le panneau de fenêtre (8).

2. Habillage de fenêtre de cabine selon la revendication 1, **caractérisé par le fait que** d'autres éléments d'habillage sont conformés en panneaux de raccordement (11) et en cache-éclairage (10), qui forment le raccordement avec le plafond de la cabine au dessus de la vitre intérieure et **par le fait qu'**il est prévu au moins une fente ou une contre-dépouille comme sortie de lumière ou d'air climatisé entre le panneau de raccordement (11) et le panneau cache-éclairage.

3. Habillage de fenêtre de cabine selon la revendication 1, **caractérisé par le fait qu'**il est prévu un moyen d'éclairage (12) dans la fente entre panneau de raccordement (11) et cache-éclairage (10).

4. Habillage de fenêtre de cabine selon une des revendications 2 ou 3, **caractérisé par le fait que** le panneau de raccordement (11) est pourvu d'un revêtement réfléchissant la lumière.

5. Habillage de fenêtre de cabine selon une des revendications 1 à 4, **caractérisé par le fait que** le panneau de fenêtre (8), pour recevoir la vitre intérieure (4B, 4B4) au nombre d'au moins une, est conformé essentiellement en U.

6. Habillage de fenêtre de cabine selon une des revendications 1 à 5, **caractérisé par le fait que** le panneau central (9) s'étend essentiellement verticalement dans la région de la vitre intérieure (4B, 4B') au nombre d'au moins une.

7. Habillage de fenêtre de cabine selon une des revendications 1 à 6, **caractérisé par le fait que** le panneau central (9) forme un moyen de fixation pour la vitre intérieure (4B, 4B4) au nombre d'au moins une.

8. Habillage de fenêtre de cabine selon une des revendications 1 à 7, **caractérisé par le fait que** le panneau central (9) est translucide ou est pourvu d'un revêtement réfléchissant la lumière.

9. Habillage de fenêtre de cabine selon une des revendications 1 à 8, **caractérisé par le fait que** le panneau central (9) est formé de différents matériaux, tels que du bois, des métaux précieux, d'éléments laqués ou revêtus d'un film décoratif.
